Europäisches Patentamt

European Patent Office

Office européen des brevets

(11) Publication number: **0 559 906 A1**

# EUROPEAN PATENT APPLICATION
## published in accordance with Art. 158(3) EPC

(21) Application number: 92919862.0

(51) Int. Cl.⁵: **G06F 15/60**

(22) Date of filing: **25.09.92**

(86) International application number:
**PCT/JP92/01222**

(87) International publication number:
**WO 93/06558 (01.04.93 93/09)**

(30) Priority: **26.09.91 JP 273499/91**

(43) Date of publication of application:
**15.09.93 Bulletin 93/37**

(84) Designated Contracting States:
**CH DE IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **SEKI, Masaki**
**5-17-23, Kugayama**
**Suginami-ku, Tokyo 168(JP)**
Inventor: **HANAOKA, Osamu, Room 9-304,**
**Fanuc Manshonharimomi**
**3533-2, Shibokusa, Oshino-mura**
**Minamitsuru-gun, Yamanashi 401-05(JP)**

(74) Representative: **Billington, Lawrence Emlyn et al**
**Haseltine Lake & Co, Hazlitt House, 28,**
**Southampton Buildings, Chancery Lane**
**London WC2A 1AT (GB)**

(54) **METHOD OF DEFINING SECTIONAL COORDINATE SYSTEM OF FREE CURVE PLANE.**

(57) A method of defining a coordinate system for defining a sectional shape on a free curve plane. To define an operation section of a free curve plane, a reference curve is first defined, and then a two-dimensional plane including a passage point on this reference curve is defined. A sectional shape (operation curve) on the operation section of the free curve plane is defined on the two-dimensional plane H-V, and the H-V plane is converted to an absolute coordinate system. To accomplish this object, (I) the operation section is defined by an arbitrary axis and a passage point on the reference curve; (II) the operation section is defined by an arbitrary plane, an arbitrary point and the passage point on the reference curve; (III) the operation section is defined by the passage point on the reference curve and a normal vector at the passage point; and (IV) the operation section is defined by the passage point on the reference curve and other arbitrary two points. In this way, the operation section can be defined easily.

Fig. 5

## TECHNICAL FIELD

The present invention relates to a method for defining a coordinate system employed for specifying a sectional configuration of a free curved surface, preferably adopted in defining this free curved surface in the CAD (computer-aided design) system.

## BACKGROUND ART

When a product such as a die or the like has a complicated curved surface to be formed by a cutting tool or the like, this surface contour to be cut is normally expressed by using the definition of free curved surface. This surface contour expression by the free curved surface is basically done by defining a plurality of cross sections with respect to one curved surface. This would be a quite effective expression when adopted in a case where the mathematical expression cannot be applied to a given curved surface.

First of all, the definition of the free curved surface starts from setting a basic cross section and defining a basic curve (a configuration element for regulating drive curves) which exists on this basic cross section. To be defined next are drive curves which express how the curved surface changes with respect to the basic curve. In other words, the sectional configuration of the curved surface is defined on a two-dimensional plane passing through a point movable on and along the basic curve.

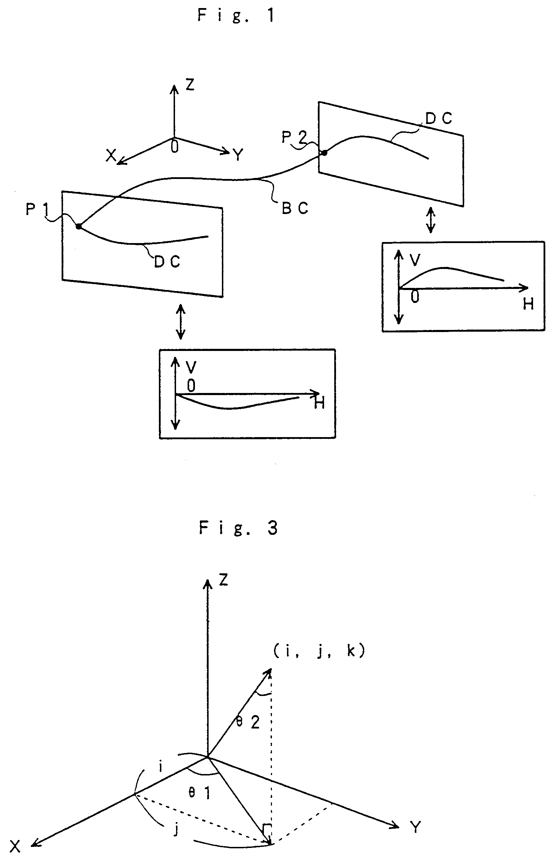

In order to express these cross sections, conventionally employed is to define both the passing points P1, P2,--- of the basic curve BC and the drive curves DC representing sectional configurations at these passing points P1, P2,--- on the two-dimensional planes H-V, i.e. on the drive cross sections, as shown in Fig. 1.

Four methods, "parallel", "radial", "normal", and "perpendicular" methods, have been utilized in defining such two-dimensional coordinate systems employed for defining the drive cross sections.

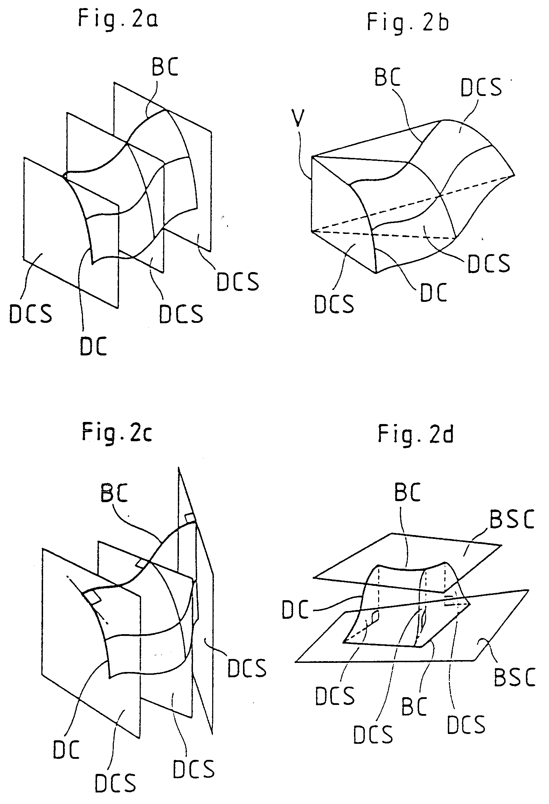

As shown in Fig. 2a, the "parallel" method specifies a plurality of planes having the same crossing angle with respect to the basic cross section on which the basic curve BC exists as the drive cross sections DCS on which the drive curves are defined. That is to say, the drive cross section DCS displaces parallel along the basic curve BC.

The "radial" method specifies one point and an axis V passing this specified point, and extends a normal to the basic cross section on which the basic curve BC exists; then, a plurality of planes extending radially from this axis are defined as the drive cross sections DCS, as shown in Fig. 2b.

The "normal" method defines the drive cross sections DCS being normal to the basic curve BC, as shown in Fig. 2c. (The normal line of the drive cross section DCS is to be identical with a tangential direction of the basic curve.)

In the case of the "perpendicular" method, two basic cross sections BCS are defined as shown in Fig. 2d. These two basic cross sections BCS involves first and second points corresponding with each other. A perpendicular is drawn from the first point on one basic curve BC to the other basic cross section BCS. Then, a plane passing above first and second points and the foot of this perpendicular is defined as the drive cross section DCS.

As described above, only limited number of methods have been conventionally utilized for defining the drive cross sections. In any of these conventional methods, the drive cross section to be defined is normal to the basic cross section on which the basic curve exists. This limits the method for inputting the sectional configuration. Therefore, these conventional methods used to encounter the difficulty in inputting sectional configurations at option.

## DISCLOSURE OF INVENTION

An object of the present invention is to provide a method for defining a coordinate system employed for specifying the cross section, which is capable of facilitating the input of sectional configuration and suited for defining optional curved surfaces.

A first aspect of the present invention consists in utilizing an optionally set straight line and a passing point on a basic curve to define a plane including this straight line and the passing point as the drive cross section on which the drive curve exists.

In this case, setting both the straight line and the passing point on the basic curve makes it possible to specify the plane including the straight line and the passing point. This plane is used as a two-dimensional plane H-V which defines a sectional configuration (drive curve) of the free curved surface. If the drive curve is defined on this H-V plane, the sectional configuration of the free curved surface can be defined by transforming the drive curve defined on this H-V plane into a curve on a plane including the straight line and the point on the basic curve. As a result, drive cross sections being radially disposed about one common axis can be specified.

According to a second aspect of the present invention, an optional plane and an optional point are defined; a coordinate position of a foot of a perpendicular, which is drawn from one point of the basic curve to the optional plane, is obtained; then, a plane including the above one point of the basic curve, the foot of the perpendicular, and the optional point is obtained; and this plane is defined as the drive cross section defining the sectional configuration of the free curved surface.

In this case, the drive cross section can be specified by the foot of the perpendicular drawn from the point on the basic curve to the specified optional plane, the specified point on the basic curve, and the specified optional point. This plane is used as the two-dimensional plane H-V which defines the sectional configuration (drive curve) of the free curved surface. If the drive curve is defined on this H-V plane, the sectional configuration of the free curved surface can be defined by transforming the drive curve defined on this H-V plane into a curve on a plane including the straight line and the basic curve. As a result, drive cross sections being normal to the specified optional plane can be specified as the cross sections of the free curved surface.

Furthermore, according to a third aspect of the present invention, an optional point on the basic curve and an optional vector extending from this optional point can also be set. A plane, including the above optional point on the basic curve and having a normal vector identical with above optional vector, is defined as the drive cross section, on which the drive curve is specified.

In this case, the cross section having the normal vector identical with the vector extending from the optional point on the basic curve is automatically set, since the optional point on the basic curve and the optional vector are both set. Consequently, the drive cross sections which cut the free curved surface optionally can be obtained.

According to a fourth aspect of the present invention, one optional point on the basic curve and the other two optional points are set, and a plane including these three points is defined as the drive cross section on which the drive curve is specified.

In this case, the cross section can be defined by the optional point on the basic curve and other two optional points. Therefore, this method is convenient in specifying the section only by use of points.

## BRIEF DESCRIPTION OF DRAWINGS

Fig. 1 is an illustrative view explaining a principle of obtaining a drive cross section of a free curved surface in accordance with the present invention;

Figs. 2a through 2d are illustrative views explaining conventional methods, each for obtaining the drive cross section;

Fig. 3 is an illustrative view explaining the method for obtaining a transformation matrix;

Fig. 4 is a block diagram showing an automatic programming apparatus for carrying out the method of the present invention;

Fig. 5 is an illustrative view explaining a first embodiment of the present invention, in which drive cross sections are defined radially about a central axis which is optionally set;

Fig. 6 is a flowchart showing the process in accordance with the first embodiment;

Fig. 7 is an illustrative view explaining a second embodiment of the present invention, in which drive cross sections are defined on the basis of a specified plane;

Fig. 8 is a flowchart showing the process in accordance with the second embodiment;

Fig. 9 is an illustrative view explaining a third embodiment of the present invention, in which drive cross sections are defined on the basis of vectors specified at respective passing points on the basic curve;

Fig. 10 is a flowchart showing the process in accordance with the third embodiment;

Fig. 11 is an illustrative view explaining a fourth embodiment of the present invention, in which drive cross sections are defined by specifying three points; and

Fig. 12 is a flowchart showing the process in accordance with the fourth embodiment.

## BEST MODE FOR CARRYING OUT THE INVENTION

The simplest way to input the sectional configuration (i.e. drive curve) of the free curved surface is to define the drive curve on a two-dimensional plane; i.e. an H-V plane, which faces the front.

Conventional methods for defining the drive curves utilize this two-dimensional plane to define the sectional configuration.

Furthermore, in the definition of the drive curves, it would be preferable that the drive cross sections can be set in a manner such that the drive curves can be defined in the simplest way. It would be also preferable if there is no restriction in the setting of the drive cross section.

In general, a plane can be specified if one point on the plane and a normal vector of this plane are given. If the drive curve is defined on thus defined H-V plane and is transformed into a curve in the absolute coordinate system, the sectional configuration of the free curved surface can be defined in the absolute coordinate system.

Accordingly, letting one point on the basic curve be (x, y, z) and the normal vector of the cross section at this point be (i, j, k), a displacement matrix M1, which causes the parallel displacement of the normal vector to the origin of the absolute coordinate system in which the basic curve is defined, is expressed by the following equation (1).

$$M\ 1 = \begin{bmatrix} 1 & 0 & 0 & 0 \\ 0 & 1 & 0 & 0 \\ 0 & 0 & 1 & 0 \\ -x & -y & -z & 1 \end{bmatrix} \quad -----------(1)$$

Furthermore, another displacement matrix M2 for the transformation from the origin to the above point (x, y, z) is defined by the following equation (2).

$$M\ 2 = \begin{bmatrix} 1 & 0 & 0 & 0 \\ 0 & 1 & 0 & 0 \\ 0 & 0 & 1 & 0 \\ x & y & z & 1 \end{bmatrix} \quad -----------(2)$$

Next, a matrix M3, which transforms a plane whose normal vector is (0, 0, 1) or the XY-plane of the absolute coordinate system into a plane whose normal vector is (i, j, k), is obtained.

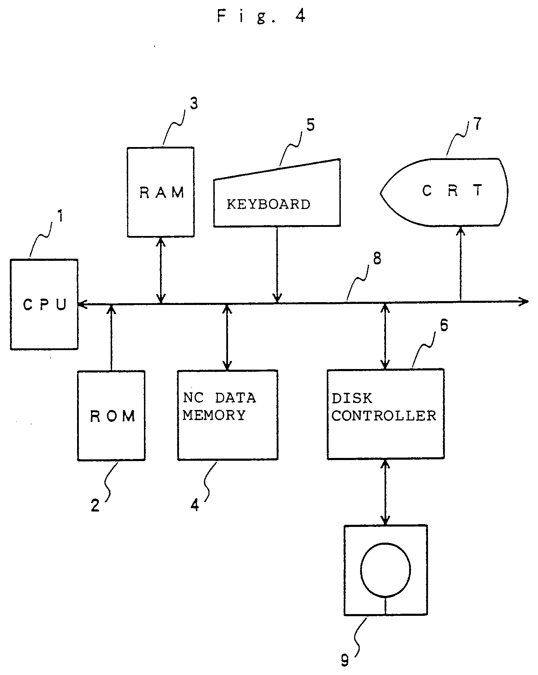

As shown in Fig. 3, letting the angle between the vector, which is a projection of the normal vector (i, j, k) on the XY-plane in the absolute coordinate system, and the X-axis be $\theta 1$, and the angle between the normal vector and the Z-axis be $\theta 2$, these angles $\theta 1$ and $\theta 2$ can be expressed by the following equations (3) and (4):

$$\theta 1 = \arctan (j/i) \quad (3)$$

$$\theta 2 = \arctan (\sqrt{(i^2 + j^2)}/k) \quad (4)$$

On the basis of these angles $\theta 1$ and $\theta 2$, the matrix M3 can be obtained by the following equation (5):

$$M3 =$$
$$\begin{bmatrix} -\sin\ \theta 1 & \cos\ \theta 1 & 0 & 0 \\ -\cos\ \theta 1 & -\sin\ \theta 1 & 0 & 0 \\ 0 & 0 & 1 & 0 \\ 0 & 0 & 0 & 1 \end{bmatrix} \cdot \begin{bmatrix} 1 & 0 & 0 & 0 \\ 0 & \cos\ \theta 2 & \sin\ \theta 2 & 0 \\ 0 & -\sin\ \theta 2 & \cos\ \theta 2 & 0 \\ 0 & 0 & 0 & 1 \end{bmatrix}$$
$$-------------(5)$$

Using the above matrixes M1, M2 and M3, the following matrix M can be obtained as follows:

$$M = M1 \cdot M2 \cdot M3 \qquad (6)$$

This matrix M represents the plane obtained by the following transformation process:

First of all, the point (x, y, z) is displaced to the origin of the absolute coordinate system, and the H-V plane is transformed into the plane whose normal vector is (i, j, k). Then, thus transformed plane having the normal vector (i, j, k) is shifted by the parallel displacement to the position of the point (x, y, z) in the absolute coordinate system.

Accordingly, by multiplying the drive curve (i.e. sectional configuration) defined on the H-V plane with this matrix M, the sectional configuration (i.e. drive curve) of the free curved surface at the point (x, y, z) on the basic curve is defined on the sectional plane whose normal vector is (i, j, k).

That is, by letting the point on the drive curve defined on the H-V plane be (h, v), the next equation (7) derives the corresponding position of this point (h, v) of the drive curve in the absolute coordinate system. As a result, the drive curve can be defined on the drive cross section which has the normal vector (i, j, k) at the point (x, y, z) on the basic curve.

$$(x, y, z) = [H, V, 0] \cdot M \qquad (7)$$

Fig. 4 is a block diagram showing an essential part of one embodiment of the automatic programming apparatus which carries out the method in accordance with the present invention.

In the drawing, numeral 1 denotes a processor (hereinafter referred to as CPU) 1 is associated with various components such as a ROM 2 which stores a control program of this programming apparatus. A RAM 3 stores system programs loaded from a floppy disk 9, part programs which may be made by the interactive processing through a graphic display (CRT) 7 and a keyboard 5, and other various data.

An NC data memory 4 stores NC data having been made. The keyboard 5 includes character keys, numeric keys, and various command keys. A disk controller 6 drives the floppy disk 9 to read the data stored therein. These components 1 through 7 are connected to each other with a bus 8.

Now, assuming that the system program is already loaded in the RAM 3 via the disk controller 6 from the floppy disk 9:

(I) The method for specifying the drive cross sections by use of a bundle of planes which involves a common axis.

This method is characterized by that the drive cross sections DCS are defined as planes involving one axis optionally set as a common axis and extending radially from this common axis.

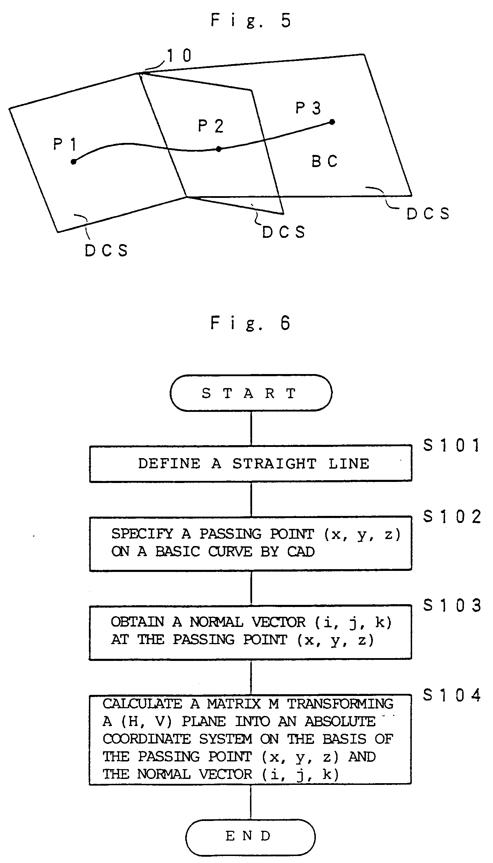

In more detail, specifying one common axis 10 and any one of points P1, P2, P3,--- passing on the basic curve BC makes it possible to univocally define a plane involving above-specified common axis 10 and any one of the passing points P1, P2, P3, --- as shown in Fig. 5.

Accordingly, letting the point on the axis 10 be (x1, y1, z1) and the direction vector of the axis 10 be (a, b, c), an equation of a straight line representing this axis 10 is expressed by the following equation (8):

$$\begin{bmatrix} x \\ y \\ z \end{bmatrix} = \begin{bmatrix} x1 \\ y1 \\ z1 \end{bmatrix} + t \cdot \begin{bmatrix} a \\ b \\ c \end{bmatrix} \qquad --------(8)$$

Any point on the straight line 10 can be determined by varying the value of the parameter t. Furthermore, a normal vector of the drive cross section DCS at each of the passing points P1, P2, P3,--- can be obtained in the following manner: two points on the straight line are first obtained by varying the value of the parameter t of the equation (8); next, two vectors which extend from the passing point to these two points are obtained; then, the outer product of between these two vectors are finally obtained and defined as the normal vector of the drive cross section DCS.

Fig. 6 is the flowchart showing the process for obtaining the drive cross section in accordance with this method.

The processor 1, first defines a straight line in step S101, and subsequently in a step S102 specifies the passing point (x, y, z) on the basic curve. Next, in a step S103, the processor 1 obtains the outer product of two vectors extending from the specified passing point to the two points on the defined straight line, and further obtains a normal vector (i, j, k) of a plane involving above straight line and the passing point.

Then, in step S104, the processor 1 obtains the displacement matrix M1, which is used to shift the passing point (x, y, z) to the origin of the absolute coordinate system, the displacement matrix M2 used for the displacement from the origin to the above-mentioned passing point (x, y, z), and the matrix M3, which transforms the plane having a normal vector (0, 0, 1), or the XY-plane in the absolute coordinate system, into the plane having the normal vector (i, j, k).

Using these three matrixes M1, M2 and M3, the processor 1 obtains the matrix M (= M1•M3•M2), which shifts the drive curve defined on the H-V plane to the drive cross section having the normal vector (i, j, k) at the passing point (x, y, z), whereby this matrix M transforms the drive curve defined on the H-V plane into the corresponding position in the absolute coordinate system.

As a result, it is concluded that the drive cross section at the passing point (x, y, z) is set by use of this transformation matrix M. Therefore, by defining the drive curve on the H-V plane and performing the calculation of above equation (6), the drive curve, i.e., the sectional configuration of the free curved surface, can be defined.

(II) The method for specifying the drive cross sections by use of a common plane.

This method is characterized by that the drive cross sections are defined to be normal to a common plane, which is set optionally.

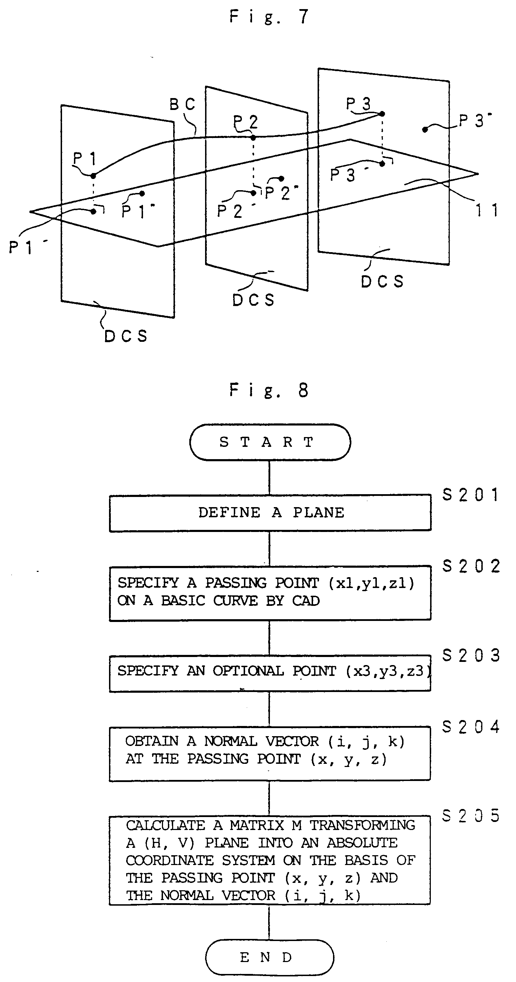

As shown in Fig. 7, a plane 11 is set optionally. Each drive cross section DCS is defined by the corresponding three points as follows: a passing point (P1, P2, P3...), that is, a point on the basic curve BC; a point on the plane 11 (P1', P2', P3'...) given by falling a perpendicular line from the above passing point to this plane 11; a point optionally set.

When the coordinate positions of the passing point P1 on the basic curve BC, the foot P1' of the perpendicular drawn from this passing point P1 to the plane 11, and the optional point P1'' are given as (x1, y1, z1), (x2, y2, z2), and (x3, y3, z3), respectively.

Furthermore, the plane 11 is defined by the following equation (9):

$$a \bullet x + b \bullet y + c \bullet z = d \qquad (9)$$

Here, a vector (a, b, c) represents the normal vector of the specified plane 11.

Then, the foot (x2, y2, z2) of the perpendicular drawn from the passing point (x1, y1, z1) to the plane 11 is expressed by a straight line which has a direction vector identical with the normal vector (a, b, c) and passes the point (x1, y1, z1). Accordingly, the following equations are established on the basis of above equation (5).

$$\begin{cases} x2 = x1 + t \cdot a \\ y2 = y1 + t \cdot b \qquad\qquad \text{----------} \quad (10) \\ z2 = z1 + t \cdot c \end{cases}$$

As the coordinate position (x2, y2, z2) of the foot is the intersection of this straight line and the plane 11, the equation (10) can be substituted for the equation (9) to obtain the value of t as follows:

$$t = \{d - (a \bullet x1 + b \bullet y1 + c \bullet z1)\} / (a^2 + b^2 + c^2)$$

Then, this value t is substituted in the equation of above straight line to obtain the coordinate position of the foot (x2, y2, z2) as follows:

$$\begin{cases} x2 = x1 + a\{d - (a \cdot x1 + b \cdot y1 + c \cdot z1)\} / (a^2 + b^2 + c^2) \\ y2 = y1 + b\{d - (a \cdot x1 + b \cdot y1 + c \cdot z1)\} / (a^2 + b^2 + c^2) \\ z2 = z1 + c\{d - (a \cdot x1 + b \cdot y1 + c \cdot z1)\} / (a^2 + b^2 + c^2) \end{cases}$$

Here, (x1, y1, z1) is the coordinate position of the passing point, and a, b, c and d are known values determined when the plane 11 is set.

If three points are determined in this manner, the plane DCS passing these three points can be specified, and the normal vector of this plane DCS is obtained as a result of the vector product between one vector extending from the passing point (x1, y1, z1) to the foot (x2, y2, z2) of the perpendicular and the other vector extending from the passing point (x1, y1, z1) to the optional point (x3, y3, z3).

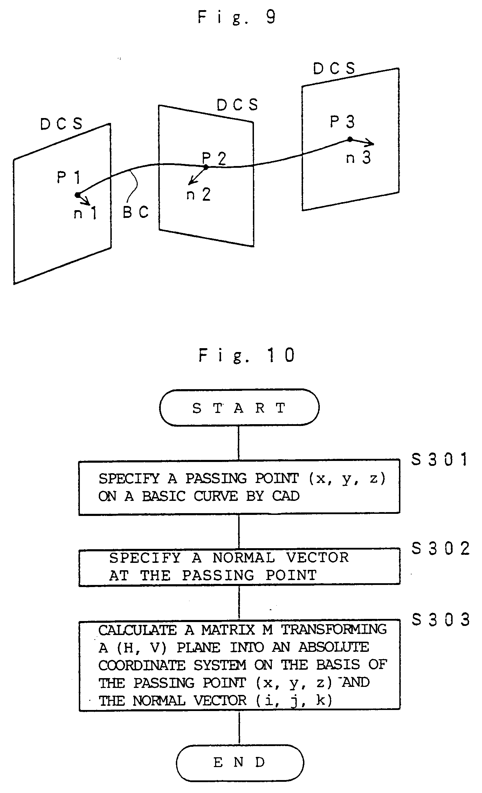

Fig. 8 is the flowchart showing the process for obtaining the drive cross section DCS in accordance with this method.

The processor 1, first defines the plane in step S201, subsequently in step S202 specifies the passing point (x1, y1, z1) on the basic curve, and further sets the optional point (x3, y3, z3) in step S203. Next, in step S204, the processor 1 obtains the coordinate position of the foot of the perpendicular drawn from the specified passing point to the plane defined, and further obtains the vector product between one vector extending from the specified passing point to the optional point and the other vector extending from the specified passing point to the foot of the perpendicular, thereby obtaining the normal vector of the plane.

Then in step S205, the processor 1 obtains the matrix M, which transforms the drive curve defined on the H-V plane to the drive cross section DCS having the above-described normal vector at the passing point, that is, matrix M transforms the drive curve defined on the H-V plane into the corresponding position in the absolute coordinate system, in the same manner as in the previous case.

(III) The method for specifying the drive cross sections by use of optional vectors.

This method is for optionally defining the drive cross sections.

As shown in Fig. 9, in this method, a plurality of passing points P1, P2, P3,----- are specified on the basic curve BC; then, normal vectors n1, n2, n3,--- are specified to define the drive cross sections corresponding to these passing points P1, P2, P3,---. That is, the drive cross section can be specified if the one point on the plane DCS and the normal vector of this plane DCS are both specified.

In this case, as shown in Fig. 10, the processor specifies the passing point on the basic curve BC in step S301 and then, in step S302, sets the normal vector n (i, j, k) which regulates the drive cross section at each passing point. As the passing point on the basic curve BC and the normal vector regulating the drive cross section are already set, the processor 1 immediately obtains in the next step S303 the matrix M which transforms the drive curve defined on the H-V plane into the corresponding position in the absolute coordinate system to complete the processing for defining the coordinate system for specifying the drive curves.

If the normal vector n is selected to be a tangential vector of the basic curve BC in this method, there is no need to set the normal vector. In such a case, all that has to be done is merely setting the passing points on the basic curve BC, since the tangential vectors at these passing points set on the basic curve BC can automatically be obtained by use of the function of the conventional CAD (i.e. the function of the automatic programming apparatus).

(IV) The method for specifying the drive cross sections by three points.

This method is also for optionally defining the drive cross sections.

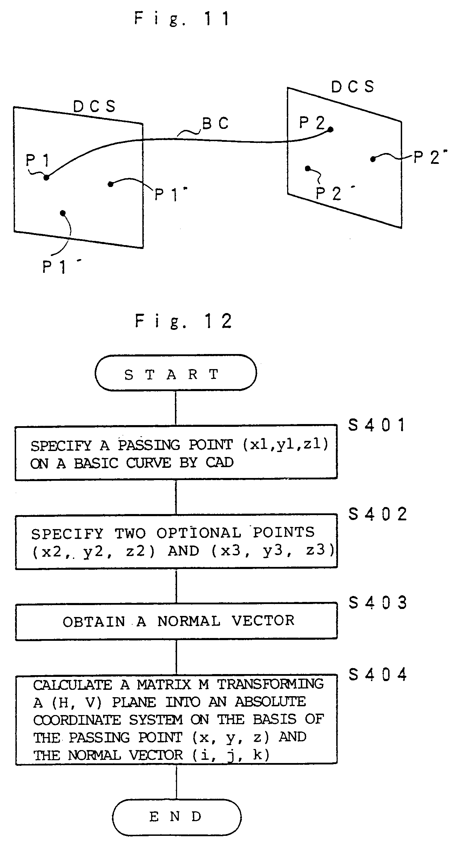

As shown in Fig. 11, the passing points P1, P2,---are specified on the basic curve BC, and, in addition, optional two points P1', P1'', P2', P2'',----- are also specified so that a plane passing three points can be specified. The normal vector of this plane can be determined as the vector product of two vectors extending from the above-specified passing point to above-specified two optional points.

Fig. 12 is the flowchart showing the processing to be executed by processor in accordance with this method. First, in step S401, the processor specifies the passing point on the basic curve BC, and subsequently in step S402 sets and inputs optional two points other than the specified passing point in order to define the drive cross section. Next, in step S403, the processor obtains two vectors extending from the specified passing point on the basic curve BC to the optional two set points, and calculates the vector product of these two vectors to obtain the normal vector of this drive cross section.

Then, in step S404, the processor obtains the matrix M, which transform the drive curve defined on the H-V plane into the corresponding position in the absolute coordinate system, on the basis of thus obtained normal vector and the position of the passing point set on the basic curve BC. Then, the processor ends this defining processing of the coordinate system used for specifying the drive curves.

When the defining processing of the coordinate system used for specifying the drive curves is completed by any of the previously-explained methods, the drive curve is defined on the H-V plane. The

EP 0 559 906 A1

drive curve is transformed into a curve defined in the absolute coordinate system by executing the calculation represented by the equation (6) of the matrix M. Thus, the drive curve, which takes the origin of the H-V plane as the passing point on the basic curve, is defined in the absolute coordinate system.

As is explained in the foregoing description, the present invention makes it possible to define a bundle of planes radially extending from a common axis set optionally as the drive cross sections, and also makes it possible to define planes normal to an optionally set common plane as the drive cross section. Furthermore, the present invention makes it possible to define entirely optional planes as the drive cross sections. As a consequence, in defining the method for specifying the drive cross section, optimum methods suiting various characteristics of the free curved surfaces can be adopted, thereby substantially expanding the adaptability in selecting the drive cross sections on which the drive curves are defined.

**Claims**

1. A method for defining a coordinate system employed for specifying a sectional configuration of a free curved surface in a CAD system, comprising steps of:

   defining a basic curve;

   defining one optional straight line;

   defining one optional point on said basic curve; and

   defining a plane, including said optional straight line and said optional point, as a drive cross section.

2. A method for defining a coordinate system employed for specifying a sectional configuration of a free curved surface in a CAD system, comprising steps of:

   defining a basic curve;

   setting one optional plane and one optional point;

   obtaining a coordinate position of a foot of a perpendicular which is drawn from one point on said basic curve to said optional plane; and

   defining a plane involving three points, which are said point on said basic curve, said foot of the perpendicular and said optional point, as a drive cross section.

3. A method for defining a coordinate system employed for specifying a sectional configuration of a free curved surface in a CAD system, comprising steps of:

   defining a basic curve;

   defining an optional point on said basic curve and an optional vector extending from this optional point; and

   defining a plane, which includes said point on said basic curve and a normal vector identical with said optional vector, as a drive cross section.

4. A method for defining a coordinate system employed for specifying a sectional configuration of a free curved surface in a CAD system, comprising steps of:

   defining a basic curve;

   setting one optional point on said basic curve;

   setting other two points which do not exist on said basic curve; and

   defining a plane including said three points as a drive cross section.

8

Fig. 1

Fig. 3

Fig.2a

Fig.2b

Fig.2c

Fig.2d

Fig. 4

Fig. 5

Fig. 6

START

DEFINE A STRAIGHT LINE    S101

SPECIFY A PASSING POINT (x, y, z)
ON A BASIC CURVE BY CAD    S102

OBTAIN A NORMAL VECTOR (i, j, k)
AT THE PASSING POINT (x, y, z)    S103

CALCULATE A MATRIX M TRANSFORMING
A (H, V) PLANE INTO AN ABSOLUTE
COORDINATE SYSTEM ON THE BASIS OF
THE PASSING POINT (x, y, z) AND
THE NORMAL VECTOR (i, j, k)    S104

END

Fig. 7

Fig. 8

```
           START
             |
   DEFINE A PLANE                              S201
             |
   SPECIFY A PASSING POINT (x1,y1,z1)          S202
   ON A BASIC CURVE BY CAD
             |
   SPECIFY AN OPTIONAL POINT (x3,y3,z3)        S203
             |
   OBTAIN A NORMAL VECTOR (i, j, k)            S204
   AT THE PASSING POINT (x, y, z)
             |
   CALCULATE A MATRIX M TRANSFORMING           S205
   A (H, V) PLANE INTO AN ABSOLUTE
   COORDINATE SYSTEM ON THE BASIS OF
   THE PASSING POINT (x, y, z) AND
   THE NORMAL VECTOR (i, j, k)
             |
           END
```

13

Fig. 9

Fig. 10

START

SPECIFY A PASSING POINT (x, y, z)
ON A BASIC CURVE BY CAD     S301

SPECIFY A NORMAL VECTOR
AT THE PASSING POINT     S302

CALCULATE A MATRIX M TRANSFORMING
A (H, V) PLANE INTO AN ABSOLUTE
COORDINATE SYSTEM ON THE BASIS OF
THE PASSING POINT (x, y, z) AND
THE NORMAL VECTOR (i, j, k)     S303

END

14

Fig. 11

Fig. 12

START

SPECIFY A PASSING POINT (x1,y1,z1)
ON A BASIC CURVE BY CAD                    S401

SPECIFY TWO OPTIONAL POINTS
(x2, y2, z2) AND (x3, y3, z3)              S402

OBTAIN A NORMAL VECTOR                      S403

CALCULATE A MATRIX M TRANSFORMING
A (H, V) PLANE INTO AN ABSOLUTE
COORDINATE SYSTEM ON THE BASIS OF          S404
THE PASSING POINT (x, y, z) AND
THE NORMAL VECTOR (i, j, k)

END

# INTERNATIONAL SEARCH REPORT

International Application No PCT/JP92/01222

## I. CLASSIFICATION OF SUBJECT MATTER (if several classification symbols apply, indicate all)

According to International Patent Classification (IPC) or to both National Classification and IPC

Int. Cl$^5$  G06F15/60

## II. FIELDS SEARCHED

| | Minimum Documentation Searched [7] |
|---|---|
| Classification System | Classification Symbols |
| IPC | G06F15/60 |

Documentation Searched other than Minimum Documentation
to the Extent that such Documents are Included in the Fields Searched [8]

Jitsuyo Shinan Koho          1926 – 1992
Kokai Jitsuyo Shinan Koho    1971 – 1992

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | JP, A, 1-319868 (Mitsubishi Electric Corp.), December 26, 1989 (26. 12. 89), (Family: none) | 1-4 |
| A | JP, A, 1-116884 (Sony Corp.), May 9, 1989 (09. 05. 89), (Family: none) | 1-4 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| October 28, 1992 (28. 10. 92) | November 24, 1992 (24. 11. 92) |
| International Searching Authority | Signature of Authorized Officer |
| Japanese Patent Office | |

Form PCT/ISA/210 (second sheet) (January 1985)